# EUROPEAN PATENT SPECIFICATION

(11) **EP 3 412 985 B1**
(45) Date of publication and mention of the grant of the patent: **24.03.2021**
(21) Application number: 16889233.9
(22) Date of filing: 02.02.2016
(51) Int. Cl.: F24H 1/00, F24H 4/04, F24D 11/02, F24D 17/02, F24D 19/10, G05D 23/19

(54) **METHOD FOR CONTROLLING WATER-HEATING SYSTEM, AND WATER-HEATING SYSTEM**
VERFAHREN ZUR STEUERUNG EINES WASSERHEIZSYSTEMS UND WASSERHEIZSYSTEM
PROCÉDÉ DE COMMANDE DE SYSTÈME DE CHAUFFAGE D'EAU, ET SYSTÈME DE CHAUFFAGE D'EAU

(43) Date of publication of application: 12.12.2018
(73) Proprietor: Mitsubishi Electric Corporation, Chiyoda-ku Tokyo 100-8310 (JP)
(72) Inventor: OTSUBO, Yusuke, Tokyo 100-8310 (JP)
(74) Representative: Mewburn Ellis LLP
(86) International application number: PCT/JP2016/053062
(87) International publication number: WO 2017/134743

(56) References cited:
- WO-A1-2015/177929
- GB-A- 2 534 608
- JP-A- 2004 125 307
- JP-A- 2004 125 307
- JP-A- 2006 138 493
- JP-A- 2006 138 493
- JP-A- 2006 300 470
- JP-A- 2008 224 071
- JP-A- 2015 224 850

## Description

### Technical Field

The present invention relates to a control method for a hot water supply system and a hot water supply system, for improving the performance of a heat pump hot water supplier in a hot water supply system using a heat pump hot water supplier with CO₂ or other gases as refrigerant.

### Background Art

Conventionally, in hot water supply systems for the Japanese domestic market, a system is adopted in which cold water heated using a heat pump hot water supplier during the night with an inexpensive electricity rate is stored in advance in a hot water storage tank as high temperature water, and the hot water is directly used in the daytime (e.g., see Non Patent Literature 1).

The heat pump hot water supplier has the characteristic that the operation efficiency lowers when inflow water temperature of water is high. However, in the above-described system, water supplied to the heat pump hot water supplier can be caused to flow from, for example, a water supply tank in a low temperature state, and to exchange heat with refrigerant in the heat pump hot water supplier to become high temperature water, and thereafter be supplied to a hot water storage tank through a hot water outflow pipe. Therefore, it is possible to ensure water supply at low temperature capable of maximizing the performance of a heat pump utilizing CO₂ refrigerant. Moreover, since hot water stored in the hot water storage tank is used directly, it is possible to supply low temperature water from a water supply tank or other storages to the heat pump hot water supplier to store high temperature water in the hot water storage tank.

### Citation List

### Non Patent Literature

Non Patent Literature 1: Mitsubishi Electric, Business Eco Cute Hot water Heat Pump, Catalog, drawings of p.8
WO2015/177929 A1 discloses a storage water heater
GB2534608 discloses a domestic hot water system
JO2004125307 discloses a hot water storage type water heater

### Summary of Invention

### Technical Problem

When the heat pump hot water supplier is utilized with water quality such as in Europe (hard water), if water on the site side (the installation place of the hot water supply system) is caused to flow directly into the heat pump hot water supplier and to be discharged at high temperature, there occurs a problem of generation of scale in a heat exchanger, and therefore clogging of a water circuit. Moreover, since there is a problem that hot water heated by a heat pump can not be used directly, in such a case, a system is adopted in which heat is exchanged between hot water heated by the heat pump hot water supplier and cold water on the site side using a heat exchanger such as a plate heat exchanger to heat it indirectly as hot water.

In the case of the indirect heating system, hot water exiting the heat pump hot water supplier exchanges heat with cold water on the site side in the heat exchanger, flows into the heat pump hot water supplier in a state of low temperature, and exchanges heat with refrigerant to become high temperature water again and to be supplied. However, in a hot water supply system using a business heat pump hot water supplier utilized in large-scale facilities such as hotels or hospitals, tanks and heat exchangers are selected depending on a load on the site side, and a water flow rate on the site side is also different depending on the load. In the heat pump hot water supplier, the water flow rate can not be adjusted depending on the load on the site side, so the temperature of water flowing into the heat pump hot water supplier may become high depending on the selections of tanks and heat exchangers in the on-site construction. In this case, in the heat pump hot water supplier utilizing CO₂ refrigerant, there is a problem that inflow water temperature into the heat pump hot water supplier becomes high to deteriorate the performance, so that inefficient operation is continued.

The present invention is intended to solve the problems as described above, and its main object is to provide a control method for a hot water supply system and a hot water supply system that improve the performance of a heat pump hot water supplier by detecting a water flow rate and temperature on a use side, and adjusting inflow water temperature into a heat pump hot water supplier.

### Solution to Problem

In a control method for a hot water supply system according to an embodiment of the present invention is set forth in claim 1 and in claim 5.,

### Advantageous Effects of Invention

In a control method for a hot water supply system according to an embodiment of the present invention, a controller controls a circulation pump provided in a circulation-side circuit to adjust a water flow rate. For this reason, the temperature of water flowing into the lower part of a hot water storage tank can be kept low, so that inflow water temperature into a heat pump hot water supplier can be kept low, thereby obtaining the effect of improving the performance of the heat pump hot water supplier.

### Brief Description of Drawings

[Fig. 1] Fig. 1 is a diagram showing a hot water supply system in Embodiment 1 of the present invention.
[Fig. 2] Fig. 2 is a diagram showing a control flow in Embodiment 2 of the present invention.
[Fig. 3] Fig. 3 is a diagram showing a hot water supply system in Embodiment 3 of the present invention.

### Description of Embodiments

Hereinafter, hot water supply systems according to embodiments of the present invention will be described. Note that the present invention is not limited by these embodiments. Moreover, components of these embodiments include those that can possibly and obviously be replaced while maintaining the identity of the invention. Furthermore, the plurality of variants described in these embodiments can be arbitrarily combined within a scope obvious to those skilled in the art.

### [Embodiment 1]

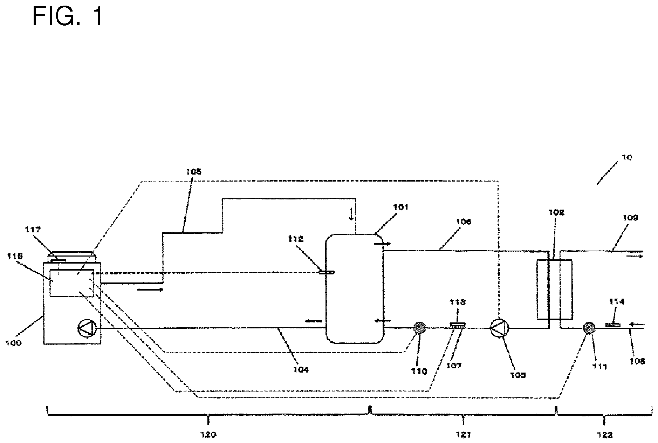

Fig. 1 is a diagram showing a hot water supply system in Embodiment 1 of the present invention. Embodiment 1 of the present invention detects water flow rates of a use-side circuit 122 and a circulation-side circuit 121 of a hot water supply system 10 of a heat pump hot water supplier 100 to control a circulation pump 103 of the circulation-side circuit 121. The hot water supply system 10 in Embodiment 1 of the present invention is composed of the heat pump hot water supplier 100, a hot water storage tank 101, a heat exchanger 102, the circulation pump 103, various pipes, and various sensors. Various pipes include a water inflow pipe 104, a hot water outflow pipe 105, a hot water storage tank hot water outflow pipe 106, a hot water storage tank water inflow pipe 107, an on-site water inflow pipe 108, and an on-site hot water outflow pipe 109. Various sensors include a hot water storage tank water inflow-side flow rate sensor 110, an on-site water inflow-side flow rate sensor 111, a hot water storage tank temperature sensor 112, a hot water storage tank water inflow pipe temperature sensor 113, an on-site water inflow pipe temperature sensor 114, and an outside air temperature sensor 117.

Hot water heated by the heat pump hot water supplier 100 flows through the hot water outflow pipe 105, and is supplied to an upper layer part of the hot water storage tank 101. Hot water stored in a lower layer part of the hot water storage tank 101 flows through the water inflow pipe 104, and is supplied to the heat pump hot water supplier 100. This connection of the heat pump hot water supplier 100, the hot water outflow pipe 105, the hot water storage tank 101, and the water inflow pipe 104 constitutes a hot water supply-side circuit 120. Hot water at high temperature in the upper layer part stored in the hot water storage tank 101 flows through the hot water storage tank hot water outflow pipe 106, and is supplied to the heat exchanger 102. Hot water having passed through the heat exchanger 102 flows through the hot water storage tank water inflow pipe 107, and is returned to the lower layer part of the hot water storage tank 101. This circulating connection of the hot water storage tank 101, the hot water storage tank hot water outflow pipe 106, the heat exchanger 102, and the hot water storage tank water inflow pipe 107 constitutes the circulation-side circuit 121. The circulation-side circuit 121 is provided with the circulation pump 103, and the circulation pump 103 circulates hot water stored in the hot water storage tank 101 through the circulation-side circuit 121. In Fig. 1, although the circulation pump 103 is installed in the hot water storage tank water inflow pipe 107 between the heat exchanger 102 and the hot water storage tank water inflow pipe temperature sensor 113, it may be installed at another place in the circulation-side circuit 121, for example, installed in the hot water storage tank hot water outflow pipe 106. Water on the site side (the installation place of the hot water supply system 10) flows through the on-site water inflow pipe 108, and is supplied to the heat exchanger 102. Water passing through the heat exchanger 102 to be heated by heat exchange flows through the on-site hot water outflow pipe 109, and is used on the site. This connection of the on-site water inflow pipe 108, the heat exchanger 102, and the on-site hot water outflow pipe 109 constitutes the use-side circuit 122.

A hot water storage tank water inflow-side flow rate sensor 110 is installed in the hot water storage tank water inflow pipe 107, and an on-site water inflow-side flow rate sensor 111 is installed in the on-site water inflow pipe 108, respectively. A hot water storage tank temperature sensor 112 is installed in the hot water storage tank 101, a hot water storage tank water inflow pipe temperature sensor 113 is installed in the hot water storage tank water inflow pipe 107, and an on-site water inflow pipe temperature sensor 114 is installed in the on-site water inflow pipe 108, respectively. Moreover, an outside air temperature sensor 117 for measuring outside air temperature is installed in the heat pump hot water supplier 100. Data detected by these various sensors is transmitted and inputted to a controller 115 of the heat pump hot water supplier 100. The controller 115 receives the data transmitted from the various sensors, and calculates an analog signal (e.g., 4-20A) to adjust the output of the circulation pump 103. The analog signal derived from the calculation by the controller 115 is output to the circulation pump 103 to control the circulation pump 103, thereby enabling adjustment of the flow rate of hot water circulating through the circulation-side circuit 121. Note that the controller 115 may have a storage unit for storing data of the various sensors.

Next, the operation in this hot water supply system 10 will be described. In the hot water supply-side circuit 120, low temperature water flowing from the water inflow pipe 104 into the heat pump hot water supplier 100 exchanges heat with refrigerant in the heat pump hot water supplier 100 to become high temperature water, and passes through the hot water outflow pipe 105 to be stored in the hot water storage tank 101. Hot water storage operation stops the operation of the heat pump hot water supplier 100 when temperature detected by the hot water storage tank temperature sensor 112 installed in the hot water storage tank 101 reaches a set value (e.g., 70 degrees C). Then, when temperature detected by the hot water storage tank temperature sensor 112 becomes equal to or lower than the set value, the operation is started, and hot water is stored in the hot water storage tank 101. In the use-side circuit 122, when hot water is required on the use side, low temperature water flows through the on-site water inflow pipe 108 into the heat exchanger 102, exchanges heat with hot water on the hot water storage tank 101 side to become high temperature water, and passes through the on-site hot water outflow pipe 109 to be supplied to the use side. In the circulation-side circuit 121, hot water in the hot water storage tank 101 flows through the hot water storage tank hot water outflow pipe 106 into the heat exchanger 102 by the circulation pump 103, and exchanges heat with water on the load side, water with decreased temperature due to heat exchange flows through the hot water storage tank water inflow pipe 107 into the hot water storage tank 101, and thereafter the same flow is repeated.

The heat pump hot water supplier has the characteristic that the operation efficiency lowers when inflow water temperature of water is high. Therefore, in this hot water supply system 10, to improve the performance of the heat pump hot water supplier, it is necessary to lower the inflow water temperature of the heat pump hot water supplier 100. Then, to lower the inflow water temperature of the heat pump hot water supplier 100, it is necessary to keep low the temperature of the bottom part of the hot water storage tank 101 communicating with the water inflow pipe 104. Furthermore, to keep low the temperature of the bottom part of the hot water storage tank 101, it is necessary to keep low the outlet temperature on the hot water storage tank 101 side of the heat exchanger 102 communicating with the hot water storage tank water inflow pipe 107. For this reason, it is necessary to control the circulation pump 103 of the circulation-side circuit 121 in accordance with the water flow rate of the use-side circuit 122. As to the control of the circulation pump 103, it suffices to adjust it through the controller 115 while detecting the value of the hot water storage tank water inflow-side flow rate sensor 110 on the circulation-side circuit 121 side, so that water having the same flow rate as a detected value of the on-site water inflow-side flow rate sensor 111 of the use-side circuit 122 also flows through the circulation-side circuit 121. Specifically, the controller 115 receives the values detected by the hot water storage tank water inflow-side flow rate sensor 110 and the on-site water inflow-side flow rate sensor 111. Then, the controller 115 generates an analog signal for controlling the circulation pump 103 so that the value of the hot water storage tank water inflow-side flow rate sensor 110 becomes equal to the value of the on-site water inflow-side flow rate sensor 111. Thereafter, the controller 115 transmits the generated analog signal to the circulation pump 103 to adjust the output of the circulation pump 103.

Note that if a relationship between the analog signal from the controller 115 and the flow rate of the circulation-side circuit 121 is stored in advance in the controller 115 at a trial operation so that the flow rate of the circulation-side circuit 121 can be adjusted immediately after detection of the flow rate, it becomes possible to smoothly set to a predetermined flow rate. Moreover, storing the relationship between the analog signal from the controller 115 and the flow rate of the circulation-side circuit 121 in the controller 115 may not be storing in advance, but be storing at any time at a predetermined interval during operation.

As described above, in Embodiment 1 of the present invention, an output adjustment signal is given to the circulation pump 103 through the controller 115 so that the flow rate of the use-side circuit 122 is equal to the flow rate of the circulation-side circuit 121. By the controller 115 controlling the circulation pump 103 to adjust the flow rate of the circulation-side circuit 121, it is possible to lower the water inflow-side temperature of the heat pump hot water supplier 100 to perform efficient operation.

### [Embodiment 2]

Control of the circulation pump 103 in the circulation-side circuit 121 of the hot water supply system 10 in Embodiment 2 of the present invention will be described using Fig. 1. As described in Embodiment 1 of the present invention, the controller 115 performs control by changing the output value to the circulation pump 103 so that the water flow rate of the use-side circuit 122 becomes equal to the water flow rate of the circulation-side circuit 121, thereby adjusting the flow rate of the circulation-side circuit 121. However, depending on the on-site load situation and performance of the heat exchanger 102, the water temperature of the hot water storage tank water inflow pipe 107 may not decrease even if the water flow rates are made equal. In such a case, it suffices to adjust the output of the circulation pump 103 so that a detected value T1 of the hot water storage tank water inflow pipe temperature sensor 113 of the hot water storage tank water inflow pipe 107 becomes close to a detected value T2 of the on-site water inflow pipe temperature sensor 114 of the on-site water inflow pipe 108.

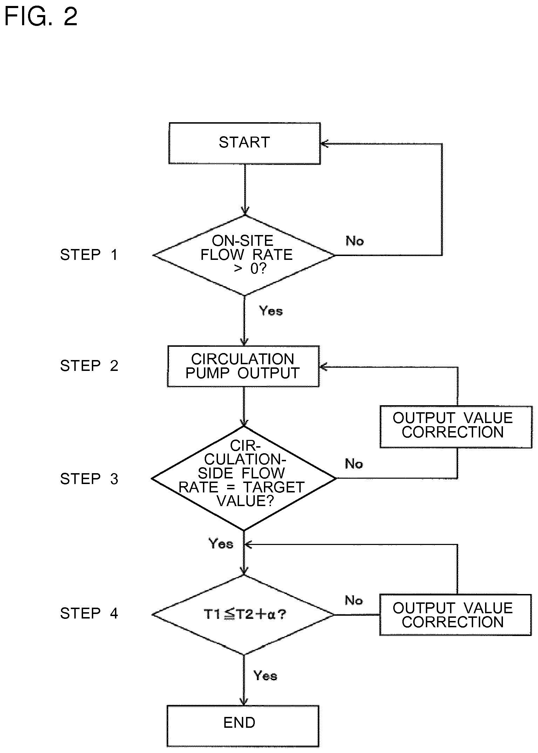

Fig. 2 is a diagram showing a control flow in Embodiment 2 of the present invention. Specifically, as shown in the flow of Fig. 2, in step 1, when flow of water in the use-side circuit 122 is detected by the on-site water inflow-side flow rate sensor 111, the current flow rate is set as a target flow rate. Next, in step 2, a required analog signal is predicted from a relationship between an analog signal and a flow rate of flow through the circulation-side circuit 121 stored in advance in the controller 115, and an analog signal close to the target flow rate is generated and outputted to adjust the flow rate of the circulation pump 103. In step 3, when the flow rate of the circulation-side circuit 121 as a result of output in step 2 does not reach the target value, the analog signal is corrected. By correcting the analog signal, the analog signal is adjusted until the value of the on-site water inflow-side flow rate sensor 111 of the use-side circuit 122 becomes equal to the value of the hot water storage tank water inflow-side flow rate sensor 110 of the circulation-side circuit 121. In step 4, the detected value T1 of the hot water storage tank water inflow pipe temperature sensor 113 of the hot water storage tank water inflow pipe 107 is compared with the detected value T2 of the on-site water inflow pipe temperature sensor 114 of the on-site water inflow pipe 108. When T1 > T2 + α (e.g., α = 3), by reducing the analog signal to lower the flow rate of the circulation pump 103 to thereby lower the value of T1, it is possible to reduce the inflow water temperature into the hot water storage tank 101 to the same level as the temperature of the on-site water inflow pipe 108. Here, to lower the temperature of the hot water storage tank water inflow pipe 107 to improve the performance of the heat pump hot water supplier, it is more preferable that the detected value T1 of the hot water storage tank water inflow pipe temperature sensor 113 of the hot water storage tank water inflow pipe 107 becomes equal to the detected value T2 of the on-site water inflow pipe temperature sensor 114 of the on-site water inflow pipe 108 (T1 = T2). However, how many degrees the temperature of T1 drops (how close it approaches T2) depends on the heat exchange efficiency of the heat exchanger 102 arranged on the site and actually used, and the water flow rate of the use-side circuit 122. Therefore, it is conceivable that the temperature of T1 slightly (+α) rises with respect to the temperature of T2. Therefore, T1 > T2 + α is set as the determination value here, and it suffices to allow α to be set according to the on-site system. Alternatively, after increasing or decreasing the flow rate on the circulation side during this control to determine how close T1 approaches T2, the value of α may be set automatically.

By adding temperature detection in addition to a water flow rate, the inflow water temperature into the hot water storage tank 101 can be lowered to the same level as the temperature of the on-site water inflow pipe 108, and therefore the inflow water temperature into the heat pump hot water supplier 100 can be further lowered, thereby enabling efficient operation.

### [Embodiment 3]

In Embodiment 3 of the present invention, countermeasures will be described in the case where the inflow water temperature into the use-side circuit 122 becomes high, or in the case where high temperature water circulates through the use-side circuit 122 though the on-site load becomes 0.

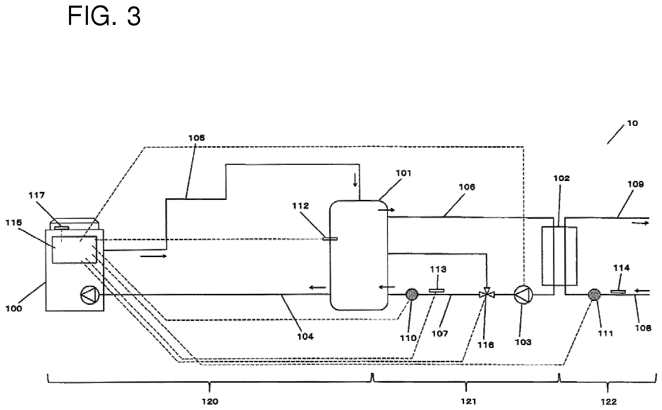

Fig. 3 is a diagram showing a hot water supply system in Embodiment 3 of the present invention. Embodiment 3 of the present invention is a circuit obtained by adding to Fig. 1 a branch pipe being a pipe for returning the hot water storage tank water inflow pipe 107 to the middle part of the hot water storage tank 101, and a three-way valve 116 for branching. The other configurations are the same as Embodiment 1 of the present invention, so the description is omitted.

Normal operation is as described in Embodiment 1 of the present invention, so the description is omitted. Here, when the load becomes 0 in the use-side circuit 122 and it becomes unnecessary to discharge hot water on the site, if the flow of water on the site is stopped, the water temperature in the use-side circuit 122 lowers. In this case, even when a load is generated in the use-side circuit 122 and hot water becomes necessary, hot water with decreased temperature is supplied to, for example, a shower on the site. Therefore, even when the load becomes 0 in the use-side circuit 122, it is common to circulate hot water in the use-side circuit 122 normally. At this time, high temperature water having passed through the on-site hot water outflow pipe 109 flows into the on-site water inflow pipe 108, the high temperature water flows into the heat exchanger 102, and the same cycle is repeated. When the hot water in the use-side circuit 122 maintains high temperature, it is unnecessary to exchange heat with hot water in the hot water storage tank 101, but when the hot water temperature of the use-side circuit 122 has decreased (e.g., from 60 degrees C to 40 degrees C), it is necessary to cause it to exchange heat with the hot water in circulation-side circuit 121 to be high temperature water. At this time, since the water in the use-side circuit 122 maintains a relatively high temperature, the inflow water temperature into the hot water storage tank 101 after the heat exchange in the heat exchanger 102 also becomes a relatively high temperature (e.g., 40 degrees C). Therefore, when this hot water is introduced into the bottom of the hot water storage tank 101, the inflow water temperature into the heat pump hot water supplier 100 also increases, so that the performance of the heat pump hot water supplier deteriorates. Therefore, in such a case, it suffices to introduce high temperature water into the middle part of the hot water storage tank 101.

Specifically, when the on-site load becomes 0 during operation and high temperature water circulates through the on-site water inflow pipe 108, so that the temperature detected by the on-site water inflow pipe temperature sensor 114 becomes higher than a set value (e.g., 50 degrees C), the output to the circulation pump 103 is stopped. When hot water circulates through the use-side circuit 122 in this state, the hot water temperature decreases especially in winter, and when it becomes equal to or lower than a threshold value (e.g., 40 degrees C), the circulation pump 103 is operated to reheat the hot water in the use-side circuit 122. The analog signal at this time is as described in Embodiment 1 of the present invention, but since the on-site inflow water temperature is relatively high (e.g., 40 degrees C), the temperature of the hot water storage tank water inflow pipe 107 also becomes relatively high. In this case, by switching the direction of the three-way valve 116, high temperature water is returned to the middle part of the hot water storage tank 101. By returning high temperature water to the middle part of the hot water storage tank 101, the temperature distribution in the hot water storage tank 101 is unlikely to collapse, and as a result, the inflow water temperature into the heat pump hot water supplier 100 can be kept low.

Note that when the value of the on-site water inflow pipe temperature sensor 114 of the on-site water inflow pipe 108 has decreased again to about a water supply temperature (e.g., 15 degrees C), it suffices to switch the direction of the three-way valve 116 to return hot water to the bottom part of the hot water storage tank 101, and make a transition to the normal control described in Embodiment 1 of the present invention.

As described above, by controlling the three-way valve 116 to switch to a circuit for returning hot water to the middle part of the hot water storage tank 101, it is possible to suppress an increase in the inflow water temperature of the heat pump hot water supplier 100, thereby enabling efficient operation.

### [Embodiment 4]

Embodiment 4 of the present invention will describe anti-freezing control in the hot water supply system 10. When the operation of the heat pump hot water supplier 100 is stopped at low outside air temperature such as in winter, water in a water circuit may be frozen. Therefore, to prevent freezing, the heat pump hot water supplier 100 has a function of operating a pump in the heat pump hot water supplier 100 to prevent freezing when detecting that temperature detected by the outside air temperature sensor 117 in the heat pump hot water supplier 100 is equal to or lower than a predetermined value (e.g., 0 degrees C). Moreover, as shown in Embodiment 3 of the present invention, the use-side circuit 122 continues to rotate high temperature water even when the load is stopped to keep outflow hot water temperature at the next load generation, and also has an anti-freezing function for the water circuit. On the other hand, also in a water pipe between the hot water storage tank 101 and the heat exchanger 102, operation for preventing freezing of a water circuit at low outside air temperature is required.

The anti-freezing operation in this hot water supply system will be described using Fig. 3. As described above, at low outside air temperature, the pump in the heat pump hot water supplier is operated according to temperature detected by the outside air temperature sensor 117 of the heat pump hot water supplier 100 to perform anti-freezing operation. In this case, it suffices to turn on the analog signal for the circulation pump 103 to cause water to flow between the hot water storage tank 101 and the heat exchanger 102, thereby performing anti-freezing operation.

In this case, when the load of the use-side circuit 122 is small, high temperature water flowing out from the hot water storage tank 101 flows into the heat exchanger 102, then exits the heat exchanger 102 in a state where a relatively high temperature state (e.g., 60 degrees C) is maintained, and thereafter flows into the hot water storage tank 101. However, when it flows into the bottom part of the hot water storage tank 101, temperature layers in the hot water storage tank 101 collapse, and therefore when temperature detected by the hot water storage tank water inflow pipe temperature sensor 113 installed in the hot water storage tank water inflow pipe 107 exceeds a threshold value (e.g., 40 degrees C), the three-way valve 116 is switched. By switching the three-way valve 116 to switch the circuit so that high temperature water flows into the middle part of the hot water storage tank 101, anti-freezing operation becomes possible without collapsing the temperature layers of the hot water storage tank 101. Note that when the load of the use-side circuit 122 increases and the temperature of water of the on-site water inflow pipe 108 flowing into the heat exchanger 102 has decreased, the water temperature of the hot water storage tank water inflow pipe 107 also decreases. In this case, when temperature detected by the hot water storage tank water inflow pipe temperature sensor 113 installed in the hot water storage tank water inflow pipe 107 becomes equal to or lower than the threshold value (e.g., 40 degrees C), it suffices to switch the three-way valve 116 again to switch the circuit so that water flows into the bottom part of the hot water storage tank 101.

As described above, in Embodiment 4 of the present invention, in addition to the anti-freezing operation for the heat pump hot water supplier 100, the water pipe side between the hot water storage tank 101 and the heat exchanger 102 is also subjected to the anti-freezing operation, thereby preventing freezing of water in winter. Then, by switching the flow of water at this time using the three-way valve 116, it is possible to achieve anti-freezing without collapsing the temperature distribution in the hot water storage tank 101.

### [Embodiment 5]

Embodiment 5 of the present invention explains a case where the controller 115 is not integral with the heat pump hot water supplier 100. In the invention according to Embodiment 1 of the present invention, the controller 115 provided in the heat pump hot water supplier 100 has been described. However, the controller 115 may not be incorporated in the heat pump hot water supplier 100 but may be a single apparatus, such as one incorporated in the circulation pump 103.

### Reference Signs List

10 hot water supply system 100 heat pump hot water supplier 101 hot water storage tank 102 heat exchanger 103 circulation pump 104 water inflow pipe 105 hot water outflow pipe 106 hot water storage tank hot water outflow pipe 107 hot water storage tank water inflow pipe 108 on-site water inflow pipe 109 on-site hot water outflow pipe 110 hot water storage tank water inflow-side flow rate sensor 111 on-site water inflow-side flow rate sensor 112 hot water storage tank temperature sensor 113 hot water storage tank water inflow pipe temperature sensor 114 on-site water inflow pipe temperature sensor 115 controller 116 three-way valve 117 outside air temperature sensor 120 hot water supply-side circuit 121 circulation-side circuit 122 use-side circuit

## Claims

1. A control method for a hot water supply system (10), the hot water supply system (10) comprising:
a heat pump hot water supplier (100);
a hot water storage tank (101) storing hot water heated by the heat pump hot water supplier (100);
a heat exchanger (102) using hot water stored in the hot water storage tank (101) as a heat medium on a high temperature side;
a hot water outflow pipe (105) allowing communication between the heat pump hot water supplier (100) and the hot water storage tank (101);
a water inflow pipe (104) allowing communication between the heat pump hot water supplier (100) and the hot water storage tank (101);
a hot water storage tank hot water outflow pipe (106) allowing communication between the hot water storage tank (101) and the heat exchanger (102);
a hot water storage tank water inflow pipe (107) allowing communication between the hot water storage tank (101) and the heat exchanger (102);
an on-site water inflow pipe (108) communicating with the heat exchanger (102);
an on-site hot water outflow pipe (109) communicating with the heat exchanger (102);
a hot water storage tank water inflow-side flow rate sensor (110) installed in the hot water storage tank water inflow pipe (107);
an on-site water inflow-side flow rate sensor (111) installed in the on-site water inflow pipe (108);
a hot water storage tank water inflow pipe temperature sensor (113) installed in the hot water storage tank water inflow pipe (107);
an on-site water inflow pipe temperature sensor (114) installed in the on-site water inflow pipe (108); and
a circulation pump (103),
wherein the hot water supply system (10) comprises a controller (115), and
the controller (115) receives values detected by the hot water storage tank water inflow-side flow rate sensor (110) and the on-site water inflow-side flow rate sensor (111), wherein the controller generates an analog signal for controlling the circulation pump (103) so that the value of the hot water storage tank water inflow-side flow rate sensor (110) becomes equal to the value of the on-site water inflow-side flow rate sensor (111), and transmits the generated analog signal to the circulation pump (103),
after the value of the hot water storage tank water inflow-side flow rate sensor (110) becomes equal to the value of the on-site water inflow-side flow rate sensor (111), the controller receives temperatures detected by the hot water storage tank water inflow pipe temperature sensor (113) and the on-site water inflow pipe temperature sensor (114), generates an analog signal for controlling the circulation pump (103) so that the temperature of the hot water storage tank water inflow pipe temperature sensor (113) becomes equal to the temperature of the on-site water inflow pipe temperature sensor (114), transmits the generated analog signal to the circulation pump (103), and
controls output of the circulation pump (103).

2. The control method for the hot water supply system (10) of claim 1, wherein when generating an analog signal for controlling the circulation pump (103), the controller (115) refers to a relationship between an analog signal and a flow rate of flow through a circulation-side circuit (121) stored in advance to generate an analog signal.

3. The control method for the hot water supply system (10) of claim 1 or 2, wherein the controller (115) stores data of a correspondence relationship between the analog signal and a value of the hot water storage tank water inflow-side flow rate sensor (110) detected corresponding to the analog signal.

4. The control method for the hot water supply system (10) of claim 3, wherein when generating an analog signal for controlling the circulation pump (103), the controller (115) refers to the stored data to generate an analog signal.

5. A control method for a hot water supply system (10), comprising the following steps performed by a controller (115):
a first step of, when flow of water in a use-side circuit (122) is detected by an on-site water inflow-side flow rate sensor (111), determining a current flow rate of the use-side circuit (122) as a target flow rate;
a second step of referring to a relationship between analog signal and flow rate of flow through a circulation-side circuit (121) stored in advance in the controller (115) to predict an analog signal, and generating and outputting an analog signal close to the target flow rate, thereby controlling a circulation pump (103) to adjust a flow rate of the circulation-side circuit (121);
a third step of, when a flow rate of the circulation-side circuit (121) does not reach the target value through the second step, correcting an analog signal until a value of the on-site water inflow-side flow rate sensor (111) of the use-side circuit (122) becomes equal to a value of a hot water storage tank water inflow-side flow rate sensor (110) of the circulation-side circuit (121) to control the circulation pump (103), thereby adjusting a flow rate of the circulation-side circuit (121); and
a fourth step of, when a flow rate of the circulation-side circuit (121) reaches the target value through the second step or the third step, comparing a detected value T1 of a hot water storage tank water inflow pipe temperature sensor (113) of a hot water storage tank water inflow pipe (107) with a detected value T2 of an on-site water inflow pipe temperature sensor (114) of an on-site water inflow pipe (108), and when T1 > T2 + α, correcting an analog signal until T1 ≤ T2 + α to control the circulation pump (103), thereby adjusting a flow rate of the circulation-side circuit (121).

6. The control method for the hot water supply system (10) of any one of claims 1 to 5, wherein
the hot water storage tank water inflow pipe (107) comprises a three-way valve (116), and
when temperature detected by the on-site water inflow pipe temperature sensor (114) is higher than a set value,
the controller (115) switches the three-way valve (116) so that the circulation pump (103) communicates with a middle part of the hot water storage tank (101).

7. The control method for the hot water supply system (10) of any one of claims 1 to 5, wherein
the hot water storage tank water inflow pipe (107) comprises a three-way valve (116), and
when temperature detected by the on-site water inflow pipe temperature sensor (114) is lower than a threshold value,
the controller (115) switches the three-way valve (116) so that the circulation pump (103) communicates with a lower part of the hot water storage tank (101).

8. The control method for the hot water supply system (10) of any one of claims 1 to 7, wherein
the heat pump hot water supplier (100) comprises an outside air temperature sensor (117), and
when temperature detected by the outside air temperature sensor (117) is lower than a predetermined value,
the controller (115) starts anti-freezing operation of the heat pump hot water supplier (100), and simultaneously starts anti-freezing operation of the circulation pump (103).

9. The control method for the hot water supply system (10) of claim 8 as dependent on claim 6 or claim 8 as dependent on claim 7, wherein
during the anti-freezing operation,
when temperature detected by the hot water storage tank water inflow pipe temperature sensor (113) is higher than a threshold value,
the controller (115) switches the three-way valve (116) so that the circulation pump (103) communicates with a middle part of the hot water storage tank (101).

10. The control method for the hot water supply system (10) of claim 8 as dependent on claim 6 or claim 8 as dependent on claim 7, wherein
during the anti-freezing operation,
when temperature detected by the hot water storage tank water inflow pipe temperature sensor (113) is lower than a threshold value,
the controller (115) switches the three-way valve (116) so that the circulation pump (103) communicates with a lower part of the hot water storage tank (101).

11. A hot water supply system (10) comprising:
a heat pump hot water supplier (100);
a hot water storage tank (101) storing hot water heated by the heat pump hot water supplier (100);
a heat exchanger (102) using hot water stored in the hot water storage tank (101) as a heat medium on a high temperature side;
a hot water outflow pipe (105) allowing communication between the heat pump hot water supplier (100) and the hot water storage tank (101);
a water inflow pipe (104) allowing communication between the heat pump hot water supplier (100) and the hot water storage tank (101);
a hot water storage tank hot water outflow pipe (106) allowing communication between the hot water storage tank (101) and the heat exchanger (102);
a hot water storage tank water inflow pipe (107) allowing communication between the hot water storage tank (101) and the heat exchanger (102);
an on-site water inflow pipe (108) communicating with the heat exchanger (102);
an on-site hot water outflow pipe (109) communicating with the heat exchanger (102);
a hot water storage tank water inflow-side flow rate sensor (110) installed in the hot water storage tank water inflow pipe (107);
an on-site water inflow-side flow rate sensor (111) installed in the on-site water inflow pipe (108);
a hot water storage tank water inflow pipe temperature sensor (113) installed in the hot water storage tank water inflow pipe (107);
an on-site water inflow pipe temperature sensor (114) installed in the on-site water inflow pipe (108); and
a circulation pump (103),
wherein the hot water supply system (10) comprises a controller (115) configured to perform the method of any of claims 1 to 10 in the hot water supply system.

12. The hot water supply system (10) of claim 11, wherein the hot water storage tank water inflow pipe (107) comprises a three-way valve (116).

## Patentansprüche

1. Steuerverfahren für ein Heißwasserversorgungssystem (10), wobei das Heißwasserversorgungssystem (10) Folgendes umfasst:
eine Wärmepumpenheißwasserversorgungsvorrichtung (100);
einen Heißwasserspeichertank (101), der durch die Wärmepumpenheißwasserversorgungsvorrichtung (100) erhitztes Wasser speichert;
einen Wärmetauscher (102), der das in dem Heißwasserspeichertank (101) gespeicherte heiße Wasser als Wärmemedium auf einer Hochtemperaturseite nutzt;
ein Heißwasserausflussrohr (105), das Kommunikation zwischen der Wärmepumpenheißwasserversorgungsvorrichtung (100) und dem Heißwasserspeichertank (101) ermöglicht;
ein Wasserzuflussrohr (104), das Kommunikation zwischen der Wärmepumpenheißwasserversorgungsvorrichtung (100) und dem Heißwasserspeichertank (101) ermöglicht;
ein Heißwasserspeichertank-Heißwasserausflussrohr (106), das Kommunikation zwischen dem Heißwasserspeichertank (101) und dem Wärmetauscher (102) ermöglicht;
ein Heißwasserspeichertank-Wasserzuflussrohr (107), das Kommunikation zwischen dem Heißwasserspeichertank (101) und dem Wärmetauscher (102) ermöglicht;
ein Vor-Ort-Wasserzuflussrohr (108), das mit dem Wärmetauscher (102) kommuniziert;
ein Vor-Ort-Wasserabflussrohr (109), das mit dem Wärmetauscher (102) kommuniziert;
einen Heißwasserspeichertank-Durchflussratensensor (110) an der Wasserzuflussseite, der in dem Heißwasserspeichertank-Wasserzuflussrohr (107) eingebaut ist;
einen Vor-Ort-Durchflussratensensor (111) an der Wasserzuflussseite, der in dem Vor-Ort-Wasserzuflussrohr (108) eingebaut ist;
einen Heißwasserspeichertank-Wasserzuflussrohrtemperatursensor (113), der in dem Heißwasserspeichertank-Wasserzuflussrohr (107) eingebaut ist;
einen Vor-Ort-Wasserzuflussrohrtemperatursensor (114), der in dem Vor-Ort-Wasserzuflussrohr (108) eingebaut ist; und
eine Zirkulationspumpe (103),
wobei das Heißwasserversorgungssystem (10) eine Steuervorrichtung (115) umfasst und die Steuervorrichtung (115) durch den Heißwasserspeichertank-Durchflussratensensor (110) an der Wasserzuflussseite und den Vor-Ort-Durchflussratensensor (111) an der Wasserzuflussseite detektierte Werte empfängt,
wobei die Steuervorrichtung ein analoges Signal zur Steuerung der Zirkulationspumpe (103) erzeugt, sodass der Wert des Heißwasserspeichertank-Durchflussratensensors (110) an der Wasserzuflussseite gleich dem Wert des Vor-Ort-Durchflussratensensors (111) an der Wasserzuflussseite wird, und das erzeugte analoge Signal an die Zirkulationspumpe (103) sendet,
die Steuervorrichtung, nachdem der Wert des Heißwasserspeichertank-Durchflussratensensors (110) an der Wasserzuflussseite gleich dem Wert des Vor-Ort-Durchflussratensensors (111) an der Wasserzuflussseite geworden ist, durch den Heißwasserspeichertank-Wasserzuflussrohrtemperatursensor (113) und den Vor-Ort-Wasserzuflussrohrtemperatursensor (114) detektierte Temperaturen empfängt, ein analoges Signal zum Steuern der Zirkulationspumpe (103) erzeugt, so dass die Temperatur des Heißwasserspeichertank-Wasserzuflussrohrtemperatursensors (113) und die Temperatur des Vor-Ort-Wasserzuflussrohrtemperatursensors (114) gleich werden, das erzeugte analoge Signal an die Zirkulationspumpe (103) sendet und
die Ausgabe der Zirkulationspumpe (103) steuert.

2. Steuerverfahren für ein Heißwasserversorgungssystem (10) nach Anspruch 1, wobei die Steuervorrichtung (115) sich bei Erzeugung eines analogen Signals zur Steuerung der Zirkulationspumpe (103) auf eine Beziehung zwischen einem analogen Signal und einer Durchflussrate der Strömung durch eine Schaltung (121) auf der Zirkulationsseite bezieht, die vorab zur Erzeugung eines analogen Signals gespeichert wurde.

3. Steuerverfahren für ein Heißwasserversorgungssystem (10) nach Anspruch 1 oder 2, wobei die Steuervorrichtung (115) Daten einer Entsprechungsbeziehung zwischen dem analogen Signal und einem Wert des Heißwasserspeichertank-Durchflussratensensors (110) an der Wasserzuflussseite speichert, der als dem analogen Signal entsprechend detektiert wurde.

4. Steuerverfahren für ein Heißwasserversorgungssystem (10) nach Anspruch 3, wobei die Steuervorrichtung (115) sich bei Erzeugung eines analogen Signals zum Steuern der Zirkulationspumpe (103) auf die gespeicherten Daten bezieht, um ein analoges Signal zu erzeugen.

5. Steuerverfahren für ein Heißwasserversorgungssystem (10), wobei das Verfahren folgende durch eine Steuervorrichtung (115) durchgeführte Schritte umfasst:
einen ersten Schritt des Bestimmens einer aktuellen Durchflussrate eines Nutzungsseitenkreislaufs (122) als Zieldurchflussrate, wenn Wasserströmung in dem Nutzungsseitenkreislauf (122) durch einen Vor-Ort-Durchflussratensensor (111) an der Wasserzuflussseite detektiert wird;
einen zweiten Schritt des Bezugnehmens auf eine Beziehung zwischen einem analogen Signal und der Durchflussrate von Strömung durch einen Zirkulationsseitenkreislauf (121), die vorab in der Steuervorrichtung (115) gespeichert ist, um ein analoges Signal vorherzusagen, und des Erzeugens und Ausgebens eines analogen Signals nahe der Zieldurchflussrate, wodurch eine Zirkulationspumpe (103) gesteuert wird, um eine Durchflussrate des Zirkulationsseitenkreislaufs (121) anzupassen;
einen dritten Schritt des Korrigierens eines analogen Signals, wenn eine Durchflussrate des Zirkulationsseitenkreislaufs (121) den Zielwert durch den zweiten Schritt nicht erreicht, bis ein Wert des Vor-Ort-Durchflussratensensors (111) an der Wasserzuflussseite des Nutzungsseitenkreislaufs (122) gleich einem Wert eines Heißwasserspeichertank-Durchflussratensensors (110) des Zirkulationsseitenkreislaufs (121) wird, um die Zirkulationspumpe (103) zu steuern und dadurch eine Durchflussrate der Zirkulationsseitenschaltung (121) anzupassen; und
wenn eine Durchflussrate des Zirkulationsseitenkreislaufs (121) den Zielwert durch den zweiten Schritt oder den dritten Schritt erreicht, einen vierten Schritt des Vergleichens eines detektierten Werts T1 eines Heißwasserspeichertank-Wasserzuflussrohrtemperatursensors (113) eines Heißwasserspeichertank-Wasserzuflussrohrs (107) mit einem detektierten Wert T2 eines Vor-Ort-Wasserzuflussrohrtemperatursensors (114) eines Vor-Ort-Wasserzuflussrohrs (108), und wenn T1 > T2 + a, des Korrigierens eines analogen Signals, bis gilt T1 ≤ T2 + a, um die Zirkulationspumpe (103) zu steuern und dadurch eine Durchflussrate des Zirkulationsseitenkreislaufs (121) anzupassen.

6. Steuerverfahren für ein Heißwasserversorgungssystem (10) nach einem der Ansprüche 1 bis 5, wobei
das Heißwasserspeichertank-Wasserzuflussrohr (107) ein Dreiwegeventil (116) umfasst und
die Steuervorrichtung (115), wenn die durch den Vor-Ort-Wasserzuflussrohrtemperatursensor (114) detektierte Temperatur höher als ein festgelegter Wert ist, das Dreiwegeventil (116) umschaltet, so dass die Zirkulationspumpe (103) mit einem mittleren Teil des Heißwasserspeichertanks (101) kommuniziert.

7. Steuerverfahren für ein Heißwasserversorgungssystem (10) nach einem der Ansprüche 1 bis 5, wobei
das Heißwasserspeichertank-Wasserzuflussrohr (107) ein Dreiwegeventil (116) umfasst und
die Steuervorrichtung (115), wenn die durch den Vor-Ort-Wasserzuflussrohrtemperatursensor (114) detektierte Temperatur niedriger als ein festgelegter Wert ist, das Dreiwegeventil (116) umschaltet, so dass die Zirkulationspumpe (103) mit einem unteren Teil des Heißwasserspeichertanks (101) kommuniziert.

8. Steuerverfahren für ein Heißwasserversorgungssystem (10) nach einem der Ansprüche 1 bis 7, wobei
die Wärmepumpenheißwasserversorgungsvorrichtung (100) einen Außenlufttemperatursensor (117) umfasst und
die Steuervorrichtung (115), wenn die durch den Außenlufttemperatursensor (117) detektierte Temperatur niedriger als ein vorbestimmter Wert ist, einen Gefrierschutzvorgang für die Wärmepumpenheißwasserversorgungsvorrichtung (100) startet und gleichzeitig einen Gefrierschutzvorgang für die Zirkulationspumpe (103) startet.

9. Steuerverfahren für ein Heißwasserversorgungssystem (10) nach Anspruch 8 in Abhängigkeit von Anspruch 6 oder nach Anspruch 8 in Abhängigkeit von Anspruch 7, wobei während des Gefrierschutzvorgangs,
wenn die durch den Heißwasserspeichertank-Wasserzuflussrohrtemperatursensor (113) detektierte Temperatur höher als ein Schwellenwert ist,
die Steuervorrichtung (115) das Dreiwegeventil (116) so umschaltet, dass die Zirkulationspumpe (103) mit einem mittleren Teil des Heißwasserspeichertanks (101) kommuniziert.

10. Steuerverfahren für ein Heißwasserversorgungssystem (10) nach Anspruch 8 in Abhängigkeit von Anspruch 6 oder nach Anspruch 8 in Abhängigkeit von Anspruch 7, wobei während des Gefrierschutzvorgangs,
wenn die durch den Heißwasserspeichertank-Wasserzuflussrohrtemperatursensor (113) detektierte Temperatur niedriger als ein Schwellenwert ist,
die Steuervorrichtung (115) das Dreiwegeventil (116) so umschaltet, dass die Zirkulationspumpe (103) mit einem unteren Teil des Heißwasserspeichertanks (101) kommuniziert.

11. Heißwasserversorgungssystem (10), das Folgendes umfasst:
eine Wärmepumpenheißwasserversorgungsvorrichtung (100);
einen Heißwasserspeichertank (101), der durch die Wärmepumpenheißwasserversorgungsvorrichtung (100) erhitztes Wasser speichert;
einen Wärmetauscher (102), der das in dem Heißwasserspeichertank (101) gespeicherte heiße Wasser als Wärmemedium auf einer Hochtemperaturseite nutzt;
ein Heißwasserausflussrohr (105), das Kommunikation zwischen der Wärmepumpenheißwasserversorgungsvorrichtung (100) und dem Heißwasserspeichertank (101) ermöglicht;
ein Wasserzuflussrohr (104), das Kommunikation zwischen der Wärmepumpenheißwasserversorgungsvorrichtung (100) und dem Heißwasserspeichertank (101) ermöglicht;
ein Heißwasserspeichertank-Heißwasserausflussrohr (106), das Kommunikation zwischen dem Heißwasserspeichertank (101) und dem Wärmetauscher (102) ermöglicht;
ein Heißwasserspeichertank-Wasserzuflussrohr (107), das Kommunikation zwischen dem Heißwasserspeichertank (101) und dem Wärmetauscher (102) ermöglicht;
ein Vor-Ort-Wasserzuflussrohr (108), das mit dem Wärmetauscher (102) kommuniziert;
ein Vor-Ort-Wasserabflussrohr (109), das mit dem Wärmetauscher (102) kommuniziert;
einen Heißwasserspeichertank-Durchflussratensensor (110) an der Wasserzuflussseite, der in dem Heißwasserspeichertank-Wasserzuflussrohr (107) eingebaut ist;
einen Vor-Ort-Durchflussratensensor (111) an der Wasserzuflussseite, der in dem Vor-Ort-Wasserzuflussrohr (108) eingebaut ist;
einen Heißwasserspeichertank-Wasserzuflussrohrtemperatursensor (113), der in dem Heißwasserspeichertank-Wasserzuflussrohr (107) eingebaut ist;
einen Vor-Ort-Wasserzuflussrohrtemperatursensor (114), der in dem Vor-Ort-Wasserzuflussrohr (108) eingebaut ist; und
eine Zirkulationspumpe (103),
wobei das Heißwasserversorgungssystem (10) eine Steuervorrichtung (115) umfasst, die ausgelegt ist, um ein Verfahren nach einem der Ansprüche 1 bis 10 in dem Heißwasserversorgungssystem durchzuführen.

12. Heißwasserversorgungssystem (10) nach Anspruch 11, wobei das Heißwasserspeichertank-Wasserzuflussrohr (107) ein Dreiwegeventil (116) umfasst.

## Revendications

1. Procédé de commande d'un système d'alimentation en eau chaude (10), le système d'alimentation en eau chaude (10) comprenant :
un dispositif d'alimentation en eau chaude à pompe à chaleur (100) :
un ballon de stockage d'eau chaude (101) stockant de l'eau chaude chauffée par le dispositif d'alimentation en d'eau chaude à pompe à chaleur (100) ;
un échangeur de chaleur (102) utilisant de l'eau chaude stockée dans le ballon de stockage d'eau chaude (101) en tant que véhicule thermique sur un côté de température élevée ;
une conduite de sortie d'eau chaude (105) permettant la communication entre le dispositif d'alimentation en eau chaude à pompe à chaleur (100) et le ballon de stockage d'eau chaude (101) ;
une conduite d'arrivée d'eau chaude (104) permettant la communication entre le dispositif d'alimentation en eau chaude à pompe à chaleur (100) et le ballon de stockage d'eau chaude (101) ;
une conduite de sortie d'eau chaude de ballon de stockage d'eau chaude (106) permettant la communication entre le ballon de stockage d'eau chaude (101) et l'échangeur de chaleur (102) ;
une conduite d'arrivée d'eau de ballon de stockage d'eau chaude (107) permettant la communication entre le ballon de stockage d'eau chaude (101) et l'échangeur de chaleur (102) ;
une conduite d'arrivée d'eau locale (108) communiquant avec l'échangeur de chaleur (102) ;
une conduite de sortie d'eau chaude locale (109) communiquant avec l'échangeur de chaleur (102) ;
un capteur de débit côté arrivée d'eau de ballon de stockage d'eau chaude (110) installé dans la conduite d'arrivée d'eau de ballon de stockage d'eau chaude (107) ;
un capteur de débit côté arrivée d'eau locale (111) installé sur une conduite d'arrivée d'eau locale (108) ;
un capteur de température de conduite d'arrivée d'eau de ballon de stockage d'eau chaude (113) installé dans la conduite d'arrivée d'eau de ballon de stockage d'eau chaude (107) ;
un capteur de température de conduite d'arrivée d'eau locale (114) installé dans la conduite d'arrivée d'eau locale (108) ; et
une pompe de circulation (103),
dans lequel le système d'alimentation en eau chaude (10) comprend un dispositif de commande (115), et
le dispositif de commande (115) reçoit des valeurs détectées par le capteur de débit côté arrivée d'eau de ballon de stockage d'eau chaude (110) et le capteur de débit côté arrivée d'eau locale (111),
dans lequel le dispositif de commande génère un signal analogique pour commander la pompe de circulation (103) de telle sorte que la valeur du capteur de débit côté arrivée d'eau de ballon de stockage d'eau chaude (110) devient égale à la valeur du capteur de débit côté arrivée d'eau locale (111), et transmet le signal analogique généré à la pompe de circulation (103),
après que la valeur du capteur de débit côté arrivée d'eau de ballon de stockage d'eau chaude (110) devient égale à la valeur du capteur de débit côté arrivée d'eau locale (111), le dispositif de commande reçoit les températures détectées par le capteur de température de conduite d'arrivée d'eau de ballon de stockage d'eau chaude (113) et le capteur de température de conduite d'arrivée d'eau locale (114), génère un signal analogique pour commander la pompe de circulation (103) de sorte que la température du capteur de température de conduite d'arrivée d'eau de ballon de stockage d'eau chaude (113) devient égale à la température du capteur de température de conduite d'arrivée d'eau locale (114), transmet le signal analogique généré à la pompe de circulation (103), et
commande la puissance de sortie de la pompe de circulation (103).

2. Procédé de commande du système d'alimentation en eau chaude (10) selon la revendication 1, dans lequel lors de la génération d'un signal analogique destiné à commander la pompe de circulation (103), le dispositif de commande (115) se réfère à une relation entre un signal analogique et un débit d'écoulement à travers un circuit côté circulation (121) stocké à l'avance pour générer un signal analogique.

3. Procédé de commande du système d'alimentation en eau chaude (10) selon la revendication 1 ou 2, dans lequel le dispositif de commande (115) stocke des données d'une relation de correspondance entre le signal analogique et une valeur du capteur de débit côté arrivée d'eau de ballon de stockage d'eau chaude (110) détectée correspondant au signal analogique.

4. Procédé de commande du système d'alimentation en eau chaude (10) selon la revendication 3, dans lequel lors de la génération d'un signal analogique pour commander la pompe de circulation (103), le dispositif de commande (115) se réfère aux données stockées pour générer un signal analogique.

5. Procédé de commande d'un système d'alimentation en eau chaude (10), comprenant les étapes réalisées par un dispositif de commande (115) suivantes :
une première étape, lorsqu'un écoulement d'eau dans un circuit côté utilisation (122) est détecté par un capteur de débit côté arrivée d'eau locale (111), de détermination d'un débit actuel du circuit côté utilisation (122) en tant que débit cible ;
une deuxième étape de référence à une relation entre un signal analogique et un débit d'écoulement à travers un circuit côté circulation (121) stocké à l'avance dans le dispositif de commande (115) pour prédire un signal analogique, et de génération et de production en sortie d'un signal analogique proche du débit cible, contrôlant ainsi une pompe de circulation (103) pour régler un débit du circuit côté circulation (121) ;
une troisième étape, lorsqu'un débit du circuit côté circulation (121) n'atteint pas la valeur cible par le biais de la deuxième étape, de correction d'un signal analogique jusqu'à ce qu'une valeur du capteur de débit côté arrivée d'eau locale (111) du circuit côté utilisation (122) devient égale à une valeur d'un capteur de débit côté arrivée d'eau de ballon de stockage d'eau chaude (110) du circuit côté circulation (121) pour commander la pompe de circulation (103), ajustant ainsi un débit du circuit côté circulation (121) ; et
une quatrième étape, lorsqu'un débit du circuit côté circulation (121) atteint la valeur cible par le biais de la deuxième étape ou de la troisième étape, de comparaison d'une valeur détectée T1 d'un capteur de température de conduite d'arrivée d'eau de ballon de stockage d'eau chaude (107) à une valeur détectée T2 d'un capteur de température de conduite d'arrivée d'eau locale (114) d'une conduite d'arrivée d'eau locale (108), et lorsque T1 > T2 + a, de correction d'un signal analogique jusqu'à ce que T1 ≤ T2 + α pour commander la pompe de circulation (103), réglant ainsi un débit du circuit côté circulation (121).

6. Procédé de commande du système d'alimentation en eau chaude (10) selon l'une quelconque des revendications 1 à 5, dans lequel
la conduite d'arrivée d'eau de ballon de stockage d'eau chaude (107) comprend une vanne à trois voies (116), et
lorsque la température détectée par le capteur de température de conduite d'arrivée d'eau locale (114) est supérieure à une valeur définie,
le dispositif de commande (115) commute la vanne à trois voies (116) de sorte que la pompe de circulation (103) communique avec une partie centrale du ballon de stockage d'eau chaude (101).

7. Procédé de commande du système d'alimentation en eau chaude (10) selon l'une quelconque des revendications 1 à 5, dans lequel
la conduite d'arrivée d'eau de ballon de stockage d'eau chaude (107) comprend une vanne à trois voies (116), et
lorsque la température détectée par le capteur de température de conduite d'arrivée d'eau locale (114) est inférieure à une valeur de seuil,
le dispositif de commande (115) commute la vanne à trois voies (116) de telle sorte que la pompe de circulation (103) communique avec une partie inférieure du ballon de stockage d'eau chaude (101).

8. Procédé de commande du système d'alimentation en eau chaude (10) selon l'une quelconque des revendications 1 à 7, dans lequel
le dispositif d'alimentation en eau chaude à pompe à chaleur (100) comprend un capteur de température extérieure de l'air (117), et
lorsque la température détectée par le capteur de température extérieure de l'air (117) est inférieure à une valeur prédéterminée,
le dispositif de commande (115) commence une opération antigel du dispositif d'alimentation en eau chaude à pompe à chaleur (100), et commence simultanément une opération antigel de la pompe de circulation (103).

9. Procédé de commande du système d'alimentation en eau chaude (10) selon la revendication 8 lorsqu'elle est dépendante de la revendication 6 ou selon la revendication 8 lorsqu'elle est dépendante de la revendication 7, dans lequel
au cours de l'opération antigel,
lorsque la température détectée par le capteur de conduite d'arrivée d'eau de ballon de stockage d'eau chaude (113) est supérieure à une valeur de seuil,
le dispositif de commande (115) commute la vanne à trois voies (116) de telle sorte que la pompe de circulation (103) communique avec une partie centrale du ballon de stockage d'eau chaude (101).

10. Procédé de commande du système d'alimentation en eau chaude (10) selon la revendication 8 lorsqu'elle est dépendante de la revendication 6 ou selon la revendication 8 lorsqu'elle est dépendante de la revendication 7, dans lequel
au cours de l'opération antigel,
lorsque la température détectée par le capteur de conduite d'arrivée d'eau de ballon de stockage d'eau chaude (113) est inférieure à une valeur de seuil,
le dispositif de commande (115) commute la vanne à trois voies (116) de telle sorte que la pompe de circulation (103) communique avec une partie inférieure du ballon de stockage d'eau chaude (101).

11. Système d'alimentation en eau chaude (10) comprenant :
un dispositif d'alimentation en eau chaude à pompe à chaleur (100) ;
un ballon de stockage d'eau chaude (101) stockant l'eau chaude chauffée par le dispositif d'alimentation en eau chaude à pompe à chaleur (100) ;
un échangeur de chaleur (102) utilisant de l'eau chaude stockée dans le ballon de stockage d'eau chaude (101) en tant que véhicule thermique sur un côté de température élevée ;
une conduite de sortie d'eau chaude (105) permettant la communication entre le dispositif d'alimentation en eau chaude à pompe à chaleur (100) et le ballon de stockage d'eau chaude (101) ;
une conduite d'arrivée d'eau (104) permettant la communication entre le dispositif d'alimentation en eau chaude à pompe à chaleur (100) et le ballon de stockage d'eau chaude (101) ;
une conduite de sortie d'eau chaude de ballon de stockage d'eau chaude (106) permettant la communication entre le ballon de stockage d'eau chaude (101) et l'échangeur de chaleur (102) ;
une conduite d'arrivée d'eau de ballon de stockage d'eau chaude (107) permettant la communication entre le ballon de stockage d'eau chaude (101) et l'échangeur de chaleur (102) ;
une conduite d'arrivée d'eau locale (108) communiquant avec l'échangeur de chaleur (102) ;
une conduite de sortie d'eau chaude locale (109) communiquant avec l'échangeur de chaleur (102) ;
un capteur de débit côté arrivée d'eau de ballon de stockage d'eau chaude (110) installé dans la conduite d'arrivée d'eau de ballon de stockage d'eau chaude (107) ;
un capteur de débit côté arrivée d'eau locale (111) installé dans la conduite d'arrivée d'eau locale (108) ;
un capteur de température de conduite d'arrivée d'eau de ballon de stockage d'eau chaude (113) installé dans la conduite d'arrivée d'eau de ballon de stockage d'eau chaude (107) ;
un capteur de température de conduite d'arrivée d'eau locale (114) installé dans la conduite d'arrivée d'eau locale (108) ; et
une pompe de circulation (103),
dans lequel le système d'alimentation en eau chaude (10) comprend un dispositif de commande (115) conçu pour réaliser le procédé selon l'une quelconque des revendications 1 à 10 dans le système d'alimentation en eau chaude.

12. Système d'alimentation en eau chaude (10) selon la revendication 11, dans lequel la conduite d'arrivée d'eau de ballon de stockage d'eau chaude (107) comprend une vanne à trois voies (116).
